# EUROPÄISCHE PATENTSCHRIFT

(11) **EP 4 169 355 B1**
(45) Veröffentlichungstag und Bekanntmachung des Hinweises auf die Patenterteilung: **23.07.2025**
(21) Anmeldenummer: 21722832.9
(22) Anmeldetag: 29.04.2021
(51) Int. Cl.: H05B 47/11

(54) **SYSTEM ZUR ERKENNUNG EINER ORIENTIERUNG EINES LICHTSENSORS**
SYSTEM FOR IDENTIFYING AN ORIENTATION OF A LIGHT SENSOR
SYSTÈME D'IDENTIFICATION D'UNE ORIENTATION D'UN CAPTEUR DE LUMIÈRE

(30) Priorität: 22.06.2020 DE 102020116370
(43) Veröffentlichungstag der Anmeldung: 26.04.2023
(73) Patentinhaber: Tridonic GmbH & Co. KG, 6851 Dornbirn (AT)
(72) Erfinder: KISTLER, Roger, 8755 Ennenda (CH); KÜNZLI, Markus, 8750 Glarus (CH); SCHLUMPF, Hans, 8718 Schänis (CH)
(74) Vertreter: Beder, Jens
(86) Internationale Anmeldenummer: PCT/EP2021/061268
(87) Internationale Veröffentlichungsnummer: WO 2021/259535

(56) Entgegenhaltungen:
- US-A1- 2017 019 976

## Beschreibung

Die Erfindung betrifft ein System zur automatischen Erkennung einer Orientierung eines Lichtsensors, wobei der Lichtsensor einer ersten oder einer zweiten Orientierung zugeordnet wird.

In der Beleuchtungstechnik werden häufig Lichtsensoren eingesetzt, um eine bedarfsgerechte Ansteuerung von Leuchtmitteln zu ermöglichen. Ein typisches Beispiel ist ein Einschalten eine Beleuchtung, wenn die Umgebungshelligkeit einen bestimmten Wert unterschreitet. Diese wird zum Beispiel bei Straßenleuchten eingesetzt. Wichtig bei solchen Anwendungen ist es, dass, unabhängig von einer Orientierung des eingesetzten Lichtsensors, die Beleuchtung immer bei einer identischen Umgebungshelligkeit eingeschaltet wird. Abhängig von einer Orientierung des Lichtsensors misst dieser allerdings zum gleichen Zeitpunkt unterschiedliche Hellichkeiten.

Es ist daher für eine zufriedenstellende Funktion zu gewährleisten, dass zum Beispiel ein Schwellwert für die Umgebungshelligkeit zum Einschalten der Beleuchtung an die jeweilige Orientierung des eingesetzten Lichtsensors angepasst wird. Ein Lichtsensor, dessen Erfassungsbereich zum Himmel gerichtet ist, wird einen größeren Wert für das einfallende Licht ausgeben als ein an derselben Leuchte angeordneter Lichtsensor, dessen Erfassungsbereich in Richtung Boden gerichtet ist. Dies spielt insbesondere dann eine Rolle, wenn der Lichtsensor in unterschiedlichen Orientierungen montiert werden kann. Um dieselben Module in unterschiedlichen Anwendungen einsetzen zu können, kann es beispielsweise gefordert sein, dass das Lichttechnikmodul eine erste Einbauposition und eine zweite Einbauposition für einen Lichtsensor ermöglicht. Da hier nicht a priori festliegt, mit welcher Orientierung der Lichtsensor montiert ist, muss bei Inbetriebnahme dem eingesetzten Lichtsensor seine Orientierung zugewiesen werden. Kennt der Lichtsensor seine Orientierung, so kann zur Ausgabe eines Einschaltsignals der korrespondierende Schwellwert zum Vergleich mit der gemessenen Intensität herangezogen werden.

Derzeit wird die Orientierung des Lichtsensors mit aufwändigen Maßnahmen ermittelt. Hierzu kann das System entweder entsprechend konfiguriert werden, d. h. bei der Inbetriebnahme durch einen Bediener wird die Orientierung des Lichtsensors im System bzw. im Lichtsensor selbst festgelegt. Auch automatisierte Erkennungen sind möglich, wobei hierzu die jeweiligen Lichtsensoren zusätzliche Sensorik aufweisen. Beispielsweise kann mit Hilfe eines Magnetometers, Gyroskops oder ähnlicher Sensorik die Orientierung des montierten Lichtsensors erfasst werden. Diese zusätzliche Sensorik wird verwendet um die tatsächliche Orientierung des jeweiligen Lichtsensors zu ermitteln. Der Lichtsensor kann dann entsprechend der erkannten Orientierung den für den Betrieb der Beleuchtung erforderlichen Schwellwert verwenden.

Dokument US 2017/019976 A1 offenbart ein Beleuchtungssystem, das aus einem oder mehreren an einem Pfosten montierten Beleuchtungsgeräten, einen Fotosensor und eine Steuerung besteht.

Nachteilig an den bekannten Lösungen ist es, dass entweder ein zusätzlicher Aufwand bei der Installation der Beleuchtung erforderlich ist, wenn ein Bediener die entsprechenden Eingaben im System vornehmen muss. Andererseits erfordern die bekannten automatisierten Systeme teurere Sensoren als wenn die Lichtsensoren lediglich die Helligkeit messen müssten.

Es ist daher Aufgabe der vorliegenden Erfindung, ein System zu schaffen, in dem einfache Lichtsensoren verwendet werden können, wobei dennoch eine automatisierte Erkennung der Orientierung des montierten Lichtsensors möglich ist.

Die Aufgabe wird durch das erfindungsgemäße Modul für eine Straßenlaterne mit den Merkmalen des unabhängigen Anspruchs 1 gelöst.

Vorteilhafte Weiterbildungen sind in den Unteransprüchen definiert.

Das erfindungsgemäße Modul für eine Straßenlaterne weist ein System zur Erkennung einer Orientierung eines Lichtsensors auf. Das System weist neben dem Lichtsensors selbst eine Informationsverarbeitungseinheit auf, die konfiguriert ist den Lichtsensor einer ersten Orientierung oder einer zweiten Orientierung basierend auf wenigstens zwei zu unterschiedlichen Zeiten durchgeführten Messungen oder einem Vergleich relativer spektraler Anteile zuzuordnen, wobei in der ersten Orientierung Tageslicht durch den Lichtsensor und in der zweiten Orientierung reflektiertes Licht erfasst wird. Dabei wird ausgenutzt, dass sich Tageslicht, welches in der ersten Position den Lichtsensor trifft, charakteristisch von reflektiertem Licht unterscheidet, welches bei einem mit der zweiten Orientierung montierten Lichtsensor gemessen wird. Somit wird unmittelbar aus einer Messung oder mehreren Messungen des einfallenden Lichts, oder zumindest spektralen Anteilen davon, die Orientierung des Lichtsensors in Richtung des Himmels oder in Richtung des Bodens ermittelt. Diese durch die Informationsverarbeitungseinheit vorgenommene Zuordnung des eingesetzten Lichtsensors zu der ersten Orientierung bzw. der zweiten Orientierung kann dann verwendet werden, um zum Beispiel einen Schwellwert für das Einschalten einer Beleuchtung entsprechend festzulegen.

Es ist zu beachten, dass die Informationsverarbeitungseinheit auch in den Lichtsensor selbst integriert sein kann.

Das System des Moduls für eine Straßenlaterne weist hierzu eine Steuereinrichtung zur Lichtsteuerung auf, wobei die Steuereinrichtung eingerichtet ist, abhängig von der erkannten Orientierung des Lichtsensors eine erste Steuerung oder eine zweite Steuerung durchzuführen. Die erste Steuerung und die zweite Steuerung unterscheiden sich dabei durch unterschiedliche Schwellwerte, die so festgelegt sind, dass sie bei der tatsächlich identischen Umgebungshelligkeit ein Schalten der Beleuchtung bewirken. Diese Steuereinrichtung kann entweder ebenfalls in den Lichtsensoren angeordnet sein, sodass durch den jeweiligen Lichtsensor ein Einschaltsignal ausgegeben wird, welche zum Beispiel in einem Betriebsgerät ausgewertet und dementsprechend Leuchtmittel angesteuert werden. Die Steuereinrichtung kann aber auch in das Betriebsgerät zur Ansteuerung der Leuchtmittel integriert sein, wobei dann durch den Lichtsensor lediglich ein Helligkeitswert übermittelt wird, der in dem Betriebsgerät mit dem zur Orientierung des Lichtsensors passenden Schwellwert verglichen wird.

Die Informationsverarbeitungseinheit ist vorzugsweise so eingerichtet, dass zur Analyse aus einem zeitlichen Verlauf eines Intensitätswerts wenigstens eines spektralen Anteils des durch den Lichtsensor erfassten Lichts ein Maximalwert ermittelt wird und mit einem Schwellwert verglichen wird. Im einfachsten Fall wird die einfallende Gesamtlichtmenge erfasst. Alternativ kann allerdings auch lediglich ein spektraler Anteil des gesamten erfassten Lichts analysiert werden. Um Fehlmessungen zu vermeiden und die Sicherheit der Zuordnung zu den Orientierungen zu verbessern kann der spektrale Anteil typischerweise ein Anteil sein, der lediglich in Tageslicht, oder zumindest überwiegende Tageslicht, vorhanden ist. Fehlerhafte Zuordnungen, die durch zusätzlich möglicherweise vorhandene Lichtquellen auftreten könnten, werden so vermieden. Ein Lichtsensor, der in Richtung Himmel orientiert ist und so einfallendes Tageslicht misst wird in derselben Situation eine höhere Intensität messen als ein in Richtung Boden gerichteter Lichtsensor. Der Schwellwert ist dabei so festgelegt, dass er nur durch die direkte

Messung des Tageslichts überschritten wird. Die Festlegung eines solchen Messwerts kann empirisch erfolgen.

Eine typische Anwendung des erfindungsgemäßen Systems sind Straßenbeleuchtungssysteme. Der zu betrachtende Zeitraum der Lichtmessung ist damit typischerweise 12, bevorzugt 24 Stunden. Bei einer Messung über einen Zeitraum von 24 Stunden ist sichergestellt, dass das jeweilige Tagesmaximum des einfallenden Tageslichts mitumfasst ist.

Gemäß einer alternativen Ausführungsform kann die Informationsverarbeitungseinheit auch eingerichtet sein, zur Analyse aus einem zeitlichen Verlauf eines Intensitätswerts wenigstens eines spektralen Anteils des durch den Lichtsensor erfassten Lichts eine Differenz zwischen Maximalwert und einem Minimalwert zu ermitteln und mit einem Schwellwert zu vergleichen. Eine solche Vorgehensweise ist insbesondere dann vorteilhaft, wenn möglicherweise durch zusätzliche Lichtquellen Verfälschungen der Messergebnisse auftreten könnten. Wird zur Analyse der Intensitätswert eines spektralen Anteils verwendet, der typischerweise nur in Tageslicht vorkommt, so kann durch das Auftreten eine Differenz, die oberhalb eines empirisch zu ermittelnden Schwellwerts liegt, dem entsprechenden Lichtsensor die erste Orientierung zum Himmel hin zugewiesen werden. Ist dagegen ein Überschreiten des Schwellwerts durch die Differenz nicht erkennbar, so wird dem Lichtsensor die zweite Orientierung zugewiesen.

Alternativ kann die Informationsverarbeitungseinheit auch eingerichtet sein, eine zeitliche Änderung einer spektralen Analyse zu ermitteln. Hierbei wird durch die Informationsverarbeitungseinheit ein Vergleich mit einem Muster durchgeführt, die den typischen Verlauf der Intensitäten von spektralen Anteilen im Tageslicht über die Zeit entspricht. Stimmen die sich zeitlich ändernden spektralen Anteile mit diesem Muster überein, so wurde die Messung durch den zum Himmel orientierten Lichtsensor durchgeführt. Ist dagegen keine Übereinstimmung erkennbar, so ist der Sensor zum Boden orientiert. Auch hier ist es bevorzugt, wenn eine Messung über einen Zeitraum von 12, bevorzugt 24 Stunden erfolgt.

Gemäß einer weiteren bevorzugten Ausführungsform wird eine zyklische Wiederholung der Messung durchgeführt. Dabei ist die Informationsverarbeitungseinheit eingerichtet, bis zum Auftreten eines Triggerereignisses den jeweils jüngsten Messwert als ersten Messwert zu speichern, der mit einem zweiten, nach dem Triggerereignis ermittelten Messwert verglichen wird. Das Triggerereignis ist dabei ein Ereignis, dem eine bekannte Änderung der Intensität des zu messenden Lichts zugeordnet werden kann. Insbesondere ist das Triggerereignis ein (erstmaliger) Einschaltvorgang der Beleuchtung. Das Einschalten der Beleuchtung führt unmittelbar zu einer Erhöhung des reflektierten Anteils und somit zu einem Anstieg der gemessenen Intensität bei dem in Richtung des Bodens orientierten Sensor. Ein in der ersten Richtung orientierter Lichtsensor wird dagegen keine Reaktion auf den Einschaltvorgang zeigen. Kann also eine zeitliche Übereinstimmung zwischen einem Anstieg der gemessenen Intensität durch den Lichtsensor und dem Einschaltvorgang erkannt werden, so ist der Lichtsensor in der zweiten Orientierung montiert. Ist ein solcher Intensitätsanstieg dagegen zum Zeitpunkt des Einschaltens nicht beobachtbar, so ist der Lichtsensor in seiner ersten Orientierung angeordnet.

Das erfindungsgemäße Modul für eine Straßenlaterne integriert das System m zur Erkennung einer Orientierung eines Lichtsensors. Dabei umfasst das Modul eine Leiterplatte, auf der Leuchtmittel angeordnet sind, und weist eine erste Schnittstelle auf, die auf derselben Seite wie die Leuchtmittel angeordnet ist, und eine zweite Schnittstelle, auf der von Leuchtmitteln abgewandten Seite. Bei einer solchen Anordnung der beiden Schnittstellen auf der Leiterplatte des Moduls ist automatisch gewährleistet, dass an einer Schnittstelle näherungsweise ausschließlich Tageslicht durch den Lichtsensor gemessen werden kann, an der anderen Schnittstellen dagegen praktisch nur reflektiertes Licht. Der Einfachheit halber seien hier zusätzlich möglicherweise vorhandene Lichtquellen, die nur vorübergehend im Erfassungsbereich des Lichtsensors sind, beispielsweise Scheinwerfer von Autos, vernachlässigt.

Die nachfolgenden Erläuterungen betreffen ein System, welches in eine Straßenlaterne integriert ist. Die Erfindung ist allerdings nicht auf eine solche Straßenlaterne beschränkt. Insbesondere kann die Informationsverarbeitungseinheit im Gegensatz zu ihrer bevorzugten Integration in den Lichtsensor oder auch die Steuereinrichtung der Straßenlaterne auch als separate Informationsverarbeitungseinheit, also einen eigenen Prozessor, realisiert sein. Dieser kann auch außerhalb der Straßenlaterne angeordnet sein, wobei er dann mit dem/den Lichtsensor/en in Verbindung stehen müsste um die von dem Lichtsensor/den Lichtsensoren gemessenen Intensitätswerte zu erhalten. Alternativ ist es auch möglich, die Informationsverarbeitungseinheit direkt in den Sensor zu integrieren. Der Lichtsensor würde in diesem Fall direkt seine Orientierung als Information ausgeben. Die Zuordnung des Lichtsensors zu einer Orientierung müsste dann der Steuereinheit zurückgemeldet werden.

Das erfindungsgemäße Modul wird nachfolgend unter Bezugnahme auf die beigefügten Zeichnungen im Detail erläutert. Dabei zeigt
- Fig. 1: eine schematische Darstellung einer Straßenleuchte mit dem erfindungsgemäßen System zur Erkennung von Orientierungen von Lichtsensoren;
- Fig. 2: ein Beispiel zur Auswertung eines zeitlichen Verlaufs gemessener Intensitätswerte für einen Lichtsensor in der ersten Orientierung und eine Lichtsensor in der zweiten Orientierung; und
- Fig. 3: ein Beispiel zur Auswertung eines Intensitätssprungs als Reaktion auf einen Einschaltvorgang der Beleuchtung.

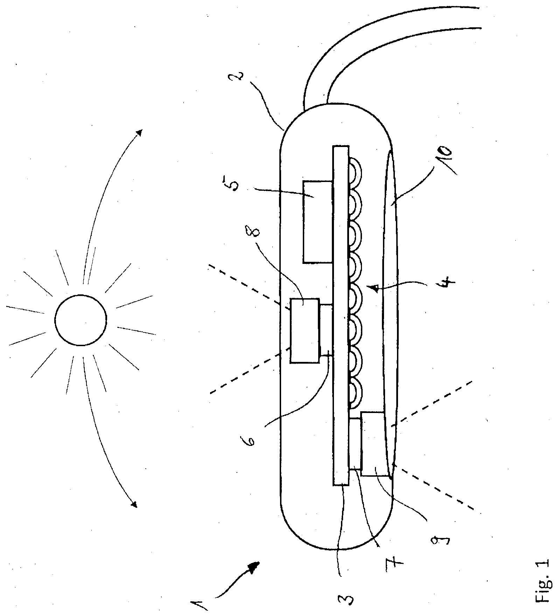

Die Figur 1 zeigt eine Straßenlaterne 1, mit einem Gehäuse 2, in dem ein Modul angeordnet ist, welches eine Leiterplatte 3 umfasst, auf der eine Mehrzahl von LEDs 4 angeordnet ist. Die LEDs 4 werden durch eine Betriebsgerät 5 mit elektrischer Energie versorgt, um Licht zu emittieren. Zum automatisierten Ein-/Ausschalten der LEDs 4 ist die Erfassung des Umgebungslichts erforderlich. Um unterschiedlichen Einbausituationen Rechnung zu tragen, ist an der Leiterplatte eine erste Schnittstelle 6 und eine zweite Schnittstelle 7 vorgesehen, die auf der Ober- bzw. Unterseite der Leiterplatte 3 ausgebildet sind.

Jede der Schnittstellen 6,7 kann einen Lichtsensor 8,9 aufnehmen, wobei durch die Orientierung der Schnittstellen auf der Oberseite der Leiterplatte 3 ein in die ersten Schnittstelle 6 eingesetzter Lichtsensor 8 ausschließlich Tageslicht, welches direkt einfällt, misst. Ein Lichtsensor 9, der in die zweite Schnittstelle 7 eingesetzt ist, misst dagegen reflektiertes Licht. Das Gehäuse 2 der Straßenlaterne 1 schattet das einfallende Sonnenlicht ab, sodass in den Erfassungsbereich des zweiten Lichtsensors 9 lediglich reflektiertes Licht einfallen kann. Die Erfassungsbereiche der beiden Lichtsensoren 8, 9 sind in der Figur 1 durch die gestrichelten Linien angedeutet. An der Unterseite des Gehäuses 2 der Straßenlaterne 1 ist schließlich noch eine Lichtaustrittsöffnung 10 ausgebildet, welche durch ein Glas oder eine Streuscheibe geschlossen sein kann.

Sowohl der erste Lichtsensor 8 als auch der zweite Lichtsensor 9 werden im Tagesverlauf sich ändernde Intensitätswerte für das einfallende Licht messen. Die absoluten Messwerte zum jeweils gleichen Zeitpunkt unterscheiden sich dabei allerdings. Diese unterschiedlichen Intensitätsmesswerte werden erfindungsgemäß dazu genutzt auf die Orientierung der Lichtsensoren 8, 9 zu schließen.

Zum korrekten Betrieb der Straßenlaterne 1 ist es nun erforderlich, Kenntnis davon zu haben, ob die gemessene Umgebungshelligkeit durch den ersten Lichtsensor 8 oder aber den zweiten Lichtsensor 9 erfasst wurde, sodass durch Vergleich der gemessenen Helligkeit mit einem für den jeweiligen Lichtsensor 8 oder 9 gültigen Schwellwert (erste Steuerung bzw. zweite Steuerung) ein Einschaltvorgang der Beleuchtung ausgelöst werden kann.

Für die nachfolgenden Ausführungen sei davon ausgegangen, dass jeder der Lichtsensoren 8, 9 eine Informationsverarbeitungseinheit aufweist, durch die die Orientierung des Lichtsensors 8, 9 zugeordnet werden kann. Alternativ ist es auch möglich, dass die Informationsverarbeitungseinheit Bestandteil der Steuereinheit und diese wiederum in das Betriebsgerät integriert ist oder sogar außerhalb der Straßenlaterne. In diesem Fall sind die Messwerte der Lichtsensoren der Informationsverarbeitungseinheit zuzuführen.

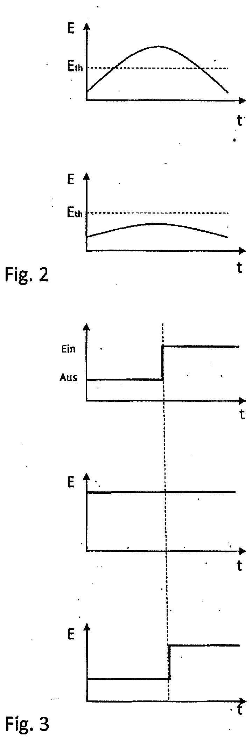

Ist die Informationsverarbeitungseinheit und die Steuereinheit Bestandteil des jeweiligen Lichtsensors 8 bzw. 9, so sind der erste Schwellwert und der zweite Schwellwert in den Lichtsensoren 8 bzw. 9 gespeichert. Bei Kenntnis seiner Einbaulage kann der jeweilige Lichtsensor 8 bzw. 9 dann den zu seiner Orientierung passenden Schwellwert zum Vergleich mit der gemessenen Umgebungshelligkeit heranziehen und so ein Schaltsignal bei Erreichen der zum Einschalten der Beleuchtung vorgesehenen Umgebungshelligkeit an das Betriebsgerät 5 übermitteln. Das Vorgehen zur Zuordnung der ersten bzw. zweiten Orientierung zu einem Lichtsensor 8, 9 wird nun anhand der Figuren 2 und 3 beschrieben.

Zunächst zeigt Figur 2 einen Tagesverlauf einer gemessenen Intensität, wobei das obere Diagramm der Figur 2 qualitativ den Verlauf der Intensität für den ersten Lichtsensor 8 und das untere Diagramm qualitativ den Verlauf der gemessenen Intensität für den zweiten Lichtsensor 9 darstellt. Es ist zu erkennen, dass der erste Lichtsensor, der zum Himmel hin, und damit auch zur Sonne, orientiert ist einen wesentlich stärkeren Anstieg der gemessenen Helligkeit erkennen lässt als der zweite Lichtsensor 9. Dieser Unterschied in der gemessenen Helligkeit im Tagesverlauf wird nun zur Auswertung verwendet.

Im einfachsten Fall wird der Verlauf der Intensitätswerte über einen Zeitraum von 24 Stunden ermittelt. Aus diesem Verlauf wird dann der Maximalwert der Intensität bestimmt und mit einem gespeicherten Grenzwert Eₜₕ verglichen. Dieser Grenzwert Eₜₕ ist dabei empirisch ermittelt und liegt so, dass bei Erfassung eines direkt einfallenden Tageslichts der Wert sicher im Tagesmaximum überschritten wird. Wie in der Figur 2 zu erkennen ist, wird dagegen durch den Maximalwert der Intensität des reflektierten Lichts der Grenzwert Eₜₕ nicht erreicht. Liegt also der Maximalwert im Verlauf von 24 Stunden oberhalb des Grenzwerts Eₜₕ, so muss es sich bei dem Lichtsensor, der diesen Intensitätswert liefert, um den ersten Lichtsensor 8 handeln, dem infolgedessen die erste Orientierung zugeordnet wird.

Umgekehrt wird einem Lichtsensor, dessen gemessene maximal Intensität den Grenzwert Eₜₕ nicht erreicht die zweite Orientierung zugeordnet.

Während aus einem Vergleich eines Absolutwerts mit dem Grenzwert Eₜₕ die Orientierung eines Lichtsensors 8, 9 ermittelt werden kann, ist es auch möglich eine relative Änderung des gemessenen Werts über die Zeit auszuwerten. In diesem Fall werden Messwerte des montierten Lichtsensors 8 bzw. 9 jeweils zu zwei zeitlich nacheinander liegenden Zeitpunkten zu ermittelt. Wie es sich aus den beiden Kurven leicht erkennen lässt, kann aus der Steigung, als dem Anstieg bzw. Abfall über die Zeit auf die jeweilige Orientierung des Lichtsensors geschlossen werden. Dabei sind die beiden Messwerte zu Zeiten zu nehmen, zu denen ein eindeutiger Anstieg der gemessenen Intensität oder aber ein eindeutiger Abfall der gemessenen Intensität erkannt werden kann. Ist dies nicht der Fall, beispielsweise im Bereich um das jeweilige Maximum, so kann vorgesehen sein, die zweite Messung zu einem späteren Zeitpunkt zu wiederholen. Die ermittelte Differenz wird mit einem gespeicherten, empirisch ermittelten Grenzwert verglichen. Abhängig davon, ob die Differenz größer oder kleiner ist wird auf den oberen bzw. unteren Lichtsensor 8 bzw. 9 geschlossen. Um sicherzustellen, dass die Messwerte zu Zeiten ermittelt werden, zu denen die Kurven einen aussagekräftigen Verlauf haben, können die Messzeiten fest vorgegeben, z.B. bei Inbetriebnahme eingestellt werden.

Anstelle der Verwendung von lediglich zwei einzelnen Messwerten kann selbstverständlich auch vorgesehen sein, den gesamten Verlauf über einen Zeitraum von beispielsweise 12 oder 24 Stunden zu betrachten. Für den Lichtsensor 8 bzw. 9 werden dann Differenzen aus den sich im Betrachtungszeitraum ergebenden Minimal- und Maximalwerten gebildet und mit einem gespeicherten, empirisch ermittelten Vergleichswert verglichen. Die Größe der Differenz zwischen Minimal- und Maximalwert zeigt an, ob der montierte Lichtsensor 8 bzw. 9 nach oben orientiert ist oder in Richtung des Bodens.

In analoger Weise, wie es vorstehend für die Intensität des gesamten einfallenden Lichts erläutert wurde, kann auch ein charakteristischer (spektraler) Anteil des Lichts verwendet werden, um die Ermittlungsgenauigkeit bzw. Ermittlungssicherheit zu verbessern. Dabei ist es insbesondere sinnvoll, einen Spektralbereich zur Auswertung zu verwenden, der sich eindeutig Tageslicht zuordnen lässt.

Die Figur 3 zeigt ein weiteres Beispiel, wie aus den gemessenen Intensitätswerten der Lichtsensoren 8, 9 auf deren Orientierung geschlossen werden kann. Hierbei wird ausgenutzt, dass der Zeitpunkt, zu dem durch das Betriebsgerät 5 die LEDs 4 eingeschaltet werden, bekannt ist. Die zeitliche Lage des Einschaltvorgangs korreliert bei dem zweiten Lichtsensor 9 mit einem Sprung in der gemessenen Intensität, da das nun zusätzlich vorhandene Licht der LEDs 4 reflektiert wird und so durch den zweiten Lichtsensor 9 mit gemessen wird. Dieser Sprung in der gemessenen Intensität ist in dem untersten Teildiagramm dargestellt.

Der erste Lichtsensor 8 wird dagegen nicht auf das Einschalten der Beleuchtung reagieren, da von oben kein reflektierter Anteil dieser zusätzlichen Lichtquelle auf die empfindliche Fläche Lichtsensors 8 fallen kann. Durch einen Abgleich der zeitlichen Lage einer Intensitätsänderung mit dem Zeitpunkt des Einschaltens kann somit auf die erste bzw. zweite Orientierung des entsprechenden Lichtsensors geschlossen werden. Ist eine Koinzidenz erkennbar, so wird diesem Lichtsensor die zweite Orientierung zugeordnet, bei Fehlen einer solchen Koinzidenz dagegen die erste Orientierung.

## Patentansprüche

1. Modul für eine Straßenlaterne (1) aufweisend:
ein System zur Erkennung einer Orientierung eines Lichtsensors (8, 9),
eine Leiterplatte (3) auf der Leuchtmittel (4) angeordnet sind,
eine erste Schnittstelle (7), die auf derselben Seite wie die Leuchtmittel (4) angeordnet ist, und
eine zweite Schnittstelle (6), auf der von Leuchtmitteln (4) abgewandten Seite,
wobei jede der Schnittstellen (6,7) den Lichtsensor (8,9) aufnehmen kann,
wobei das System den Lichtsensor (8, 9) und eine Informationsverarbeitungseinheit umfasst, die konfiguriert ist den Lichtsensor (8, 9) einer ersten Orientierung oder einer zweiten Orientierung basierend auf wenigstens zwei zu unterschiedlichen Zeiten durchgeführten Messungen oder einem Vergleich relativer spektraler Anteile zuzuordnen, wobei das Modul derart eingerichtet ist, dass
in der ersten Orientierung direkt einfallendes Tageslicht durch den Lichtsensor (8, 9) und in der zweiten Orientierung reflektiertes Licht erfasst wird.

2. Modul nach Anspruch 1,
**dadurch gekennzeichnet,**
**dass** das System des Moduls eine Steuereinrichtung zur Lichtsteuerung aufweist, wobei die Steuereinrichtung eingerichtet ist, abhängig von der erkannten Orientierung des Lichtsensors (8, 9) eine erste Steuerung oder eine zweite Steuerung durchzuführen.

3. Modul nach Anspruch 1 oder 2,
**dadurch gekennzeichnet,**
**dass** die Informationsverarbeitungseinheit des Systems des Moduls eingerichtet ist, zu einer Analyse aus einem zeitlichen Verlauf eines Intensitätswerts wenigstens eines spektralen Anteils des durch den Lichtsensor (8, 9) erfassten Lichts einen Maximalwert zu ermitteln und mit einem Schwellwert zu vergleichen.

4. Modul nach Anspruch 1 oder 2,
**dadurch gekennzeichnet,**
**dass** die Informationsverarbeitungseinheit des Systems des Moduls eingerichtet ist, zu einer Analyse aus einem zeitlichen Verlauf eines Intensitätswerts wenigstens eines spektralen Anteils des durch den Lichtsensor (8, 9) erfassten Lichts eine Differenz zwischan Maximalwert und einem Minimalwert zu ermitteln und mit einem Schwellwert
(Eₜₕ) zu vergleichen.

5. Modul nach Anspruch 1 oder 2,
**dadurch gekennzeichnet,**
**dass** die Informationsverarbeitungseinheit des Systems des Moduls eingerichtet ist, eine zeitliche Änderung einer spektralen Analyse zu ermitteln.

6. Modul nach einem der Ansprüche 1 bis 5,
**dadurch gekennzeichnet,**
**dass** die Informationsverarbeitungseinheit des Systems des Moduls eingerichtet ist, zur Analyse Messwerte über einen Zeitraum von wenigstens 12 Stunden, bevorzugt 24 Stunden, zu berücksichtigen.

7. Modul nach Anspruch 1 oder 2,
**dadurch gekennzeichnet,**
**dass** eine zyklische Wiederholung der Messung erfolgt und die Informationsverarbeitungseinheit des Systems des Moduls eingerichtet ist, bis zum Auftreten eines Triggerereignisses den jeweils jüngsten Messwert als ersten Messwert zu speichern, der mit einem zweiten, nach dem Triggerereignis ermittelten Messwert verglichen wird.

8. Modul nach Anspruch 7,
**dadurch gekennzeichnet,**
**dass** das Triggerereignis ein erstmaliger Einschaltvorgang ist.

## Claims

1. Module for a streetlight (1), comprising:
a system for identifying an orientation of a light sensor (8, 9),
a printed circuit board (3) on which lamps (4) are arranged,
a first interface (7) which is arranged on the same side as the lamps (4), and
a second interface (6) on the side facing away from the lamps (4),
wherein each of the interfaces (6, 7) can accommodate the light sensor (8, 9),
wherein the system comprises the light sensor (8, 9) and an information processing unit which is configured to assign the light sensor (8, 9) to a first orientation or to a second orientation based on at least two measurements carried out at different times or on a comparison of relative spectral components,
wherein the module is designed such that
in the first orientation, directly incident daylight is detected by the light sensor (8, 9) and in the second orientation, reflected light is detected.

2. Module according to claim 1,
**characterized in that**
the system of the module has a control device for light control, the control device being designed to carry out a first control or a second control depending on the identified orientation of the light sensor (8, 9).

3. Module according to claim 1 or claim 2,
**characterized in that**
the information processing unit of the system of the module is designed, for the purpose of an analysis, to determine a maximum value from a temporal profile of an intensity value of at least one spectral component of the light detected by the light sensor (8, 9), and to compare said maximum value with a threshold value.

4. Module according to claim 1 or claim 2,
**characterized in that**
the information processing unit of the system of the module is designed, for the purpose of an analysis, to determine a difference between the maximum value and a minimum value from a temporal profile of an intensity value of at least one spectral component of the light detected by the light sensor (8, 9), and to compare said difference with a threshold value.

5. Module according to claim 1 or claim 2,
**characterized in that**
the information processing unit of the system of the module is designed to determine a temporal change in a spectral analysis.

6. Module according to any of claims 1 to 5,
**characterized in that**
the information processing unit of the system of the module is designed to consider measured values over a period of at least 12 hours, preferably 24 hours, for analysis.

7. Module according to claim 1 or claim 2,
**characterized in that**
a cyclical repetition of the measurement takes place and the information processing unit of the system of the module is designed to store the most recent measured value as the first measured value until a trigger event occurs, which first measured value is compared with a second measured value determined after the trigger event.

8. Module according to claim 7,
**characterized in that**
the trigger event is a first-time power-on process.

## Revendications

1. Module pour un lampadaire (1) présentant :
un système pour la reconnaissance d'une orientation d'un capteur de lumière (8, 9),
une carte de circuit imprimé (3) sur laquelle sont disposés des moyens d'éclairage (4),
une première interface (7) disposée du même côté que les moyens d'éclairage (4), et
une seconde interface (6), sur le côté opposé aux moyens d'éclairage (4),
dans lequel chacune des interfaces (6, 7) peut recevoir le capteur de lumière (8, 9),
dans lequel le système comprend le capteur de lumière (8, 9) et une unité de traitement d'informations configurée pour attribuer au capteur de lumière (8, 9) une première orientation ou une seconde orientation sur la base d'au moins deux mesures effectuées à des moments différents ou d'une comparaison de composantes spectrales relatives, dans lequel
le module est configuré de telle sorte que,
dans la première orientation, une lumière naturelle directement incidente est détectée par le capteur de lumière (8, 9) et, dans la seconde orientation, la lumière réfléchie est détectée.

2. Module selon la revendication 1,
**caractérisé en ce**
**que** le système du module présente un dispositif de commande pour la commande de lumière, dans lequel le dispositif de commande est configuré pour effectuer une première commande ou une seconde commande en fonction de l'orientation reconnue du capteur de lumière (8, 9).

3. Module selon la revendication 1 ou 2,
**caractérisé en ce**
**que** l'unité de traitement d'informations du système du module est configurée pour déterminer, pour une analyse, une valeur maximale à partir d'une évolution temporelle d'une valeur d'intensité d'au moins une composante spectrale de la lumière détectée par le capteur de lumière (8, 9) et pour la comparer à une valeur seuil.

4. Module selon la revendication 1 ou 2,
**caractérisé en ce**
**que** l'unité de traitement d'informations du système du module est configurée pour déterminer, pour une analyse, une différence entre une valeur maximale et une valeur minimale à partir d'une évolution temporelle d'une valeur d'intensité d'au moins une composante spectrale de la lumière détectée par le capteur de lumière (8, 9) et pour la comparer à une valeur seuil.

5. Module selon la revendication 1 ou 2,
**caractérisé en ce**
**que** l'unité de traitement d'informations du système du module est configurée pour déterminer une modification temporelle d'une analyse spectrale.

6. Module selon l'une des revendications 1 à 5,
**caractérisé en ce**
**que** l'unité de traitement d'informations du système du module est configurée pour prendre en compte, pour l'analyse, des valeurs de mesure sur une période d'au moins 12 heures, de préférence 24 heures.

7. Module selon la revendication 1 ou 2,
**caractérisé en ce**
**qu'**une répétition cyclique de la mesure est effectuée et l'unité de traitement d'informations du système du module est configurée pour enregistrer, jusqu'à l'apparition d'un évènement déclencheur, la valeur de mesure la plus récente respective en tant que première valeur de mesure, laquelle est comparée à une seconde valeur de mesure déterminée après l'évènement déclencheur.

8. Module selon la revendication 7,
**caractérisé en ce**
**que** l'évènement déclencheur est une première mise sous tension.
